# EUROPEAN PATENT SPECIFICATION

(11) **EP 2 790 403 B1**
(45) Date of publication and mention of the grant of the patent: **18.05.2016**
(21) Application number: 14161691.2
(22) Date of filing: 26.03.2014
(51) Int. Cl.: H04N 7/035

(54) **Video signal decoding apparatus and associated method**
Videosignaldekodiervorrichtung und zugehöriges Verfahren
Appareil de décodage de signal vidéo et procédé associé

(30) Priority: 08.04.2013 US 201361809431 P
(43) Date of publication of application: 15.10.2014
(73) Proprietor: MStar Semiconductor, Inc., Chupei 302 (TW)
(72) Inventor: Wong, Wei-Shu, 302 Chupei (TW)
(74) Representative: Mollekopf, Gerd Willi

(56) References cited:
- WO-A1-96/13936
- US-A1- 2005 195 326

## Description

### BACKGROUND OF THE INVENTION

### Field of the Invention

The invention relates in general to a video signal decoding apparatus and an associated method, and more particularly to an apparatus for determining aspect ratio information of a video image according to the phase alternative line (PAL) or sequentiel couleur a mémoire (SECAM) standard, and an associated method.

### Description of the Related Art

In a television system based on the PAL or SECAM standard, the 23^{rd} scan line of a video image (one frame or two fields) carries certain characteristic information of the video image. The characteristic information, including aspect ratio information of the video image, allows the television to correctly display a correct image according to an actual aspect ratio of the video image. Although the PAL or SECAM standard specifies the data carried by the 23^{rd} scan line, it remains a task of designers of televisions to design a high-quality video signal decoding apparatus and method with a good error tolerance. Document WO 96/13936 describes a conventional wide screen signalling decoder (WSS) as well as a new decoder.

### SUMMARY OF THE INVENTION

The invention is defined in claims 1 and 9, respectively. Particular embodiments are set out in the dependent claims.

The invention is directed to a video signal decoding apparatus and an associated method for obtaining aspect ratio information of a video image.

A video signal decoding method for decoding additional information in a video signal is provided by the present invention. The video signal includes a plurality of scan lines corresponding to a video image. The method includes: detecting a target scan line in the video signal, wherein a signal of the target scan line includes a run-in code, identification information and the additional information; determining a first working interval according to a synchronization signal corresponding to the target scan line; in the first working interval, detecting the run-in code; determining a second working interval and a third working interval according to a time point at which the run-in code is detected; in the second working interval, adjusting a sampling clock according to the run-in code; generating sampled data according to the sampling clock and the signal of the target scan line; in the third working period, detecting the identification information according to the sampled data to generate a detection result of the identification information; and decoding the additional information according to the sampled data and the detection result of the identification information.

A video signal decoding apparatus that decodes additional information in a video signal is provided by the present invention. The video signal includes a plurality of scan lines corresponding to a video image. The apparatus includes: a scan line detecting circuit, configured to detect a target scan line in the video signal to correspondingly generate an indication signal, wherein a signal of the target scan line includes a run-in code, identification information and the additional information; a run-in code detecting circuit, configured to detect the run-in code in a first working interval according to the indication signal; an adjusting circuit, coupled to the run-in code detecting circuit, configured to adjust a sampling clock in a second working interval according to the run-in code; a sampling circuit, configured to generate sampled data according to the sampling clock and the signal of the target scan line; an identification information detecting circuit, configured to detect the identification information in a third working interval according to the sampled data to generate a detection result of the identification information; and an additional information decoding circuit, configured to decode the additional information according to the sampled data and the detection result of the identification information. The second working interval and the third working interval are determined according to a time point at which the run-in code is detected.

In the video signal decoding apparatus and method of the present invention, multiple working intervals are determined according to the PAL or SECAM standard. As such, processes such as detecting a run-in code, locking the phase of a sampling clock and detecting a start code can all be completed in respective working intervals. Particularly, the working interval for locking a sampling clock and the working interval for detecting a start code are provided according to a start point of a detected run-in code. Thus, more accurate working intervals can be determined and an error tolerance of the video signal decoding apparatus in decoding additional information can be increased.

The above and other aspects of the invention will become better understood with regard to the following detailed description of the preferred but non-limiting embodiments. The following description is made with reference to the accompanying drawings.

### BRIEF DESCRIPTION OF THE DRAWINGS

- FIG. 1: is a schematic diagram of a video signal decoding apparatus according to an embodiment of the present invention;
- FIG. 2: is a waveform of a signal of one scan line in a digital signal DCVBS;
- FIG. 3: is a timing diagram of working intervals of the video signal decoding apparatus; and
- FIG. 4 and 5: show a flowchart of a video signal decoding method.

### DETAILED DESCRIPTION OF THE INVENTION

Technical terms of the application are based on general definition in the technical field of the application. If the application describes or explains one or some terms, definition of the terms are based on the description or explanation of the application.

The disclosure of the application includes video signal decoding apparatus and an associated method, which obtain characteristics of a video signal, e.g., aspect ratio information of an image. The apparatus and method are applicable to a PAL or SECAM television system. In possible implementation, one skilled person in the art may choose equivalent elements or steps to implement the disclosure based on the disclosure of the application. That is, the implementation of the disclosure is not limited by the embodiments disclosed in the disclosure. A part of the elements included in the video signal decoding apparatus may be known elements. Without affecting the full disclosure and possible implementation of the apparatus of the application, details of such known elements are omitted in the description. Further, the video signal decoding method of the application is implementable by the video signal decoding apparatus of the application or an equivalent apparatus. Without affecting the full disclosure and possible implementation of the method of the application, the description associated with the method focuses on details of the steps instead of on hardware.

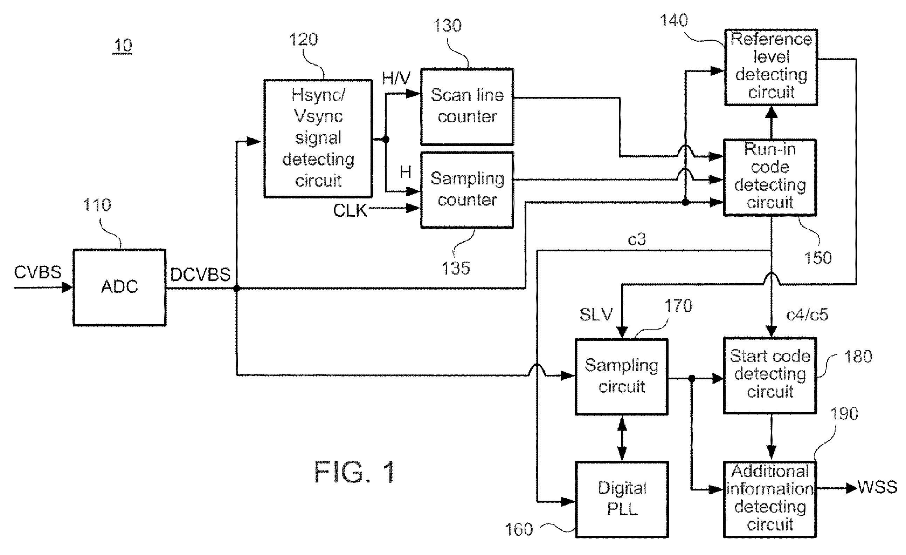

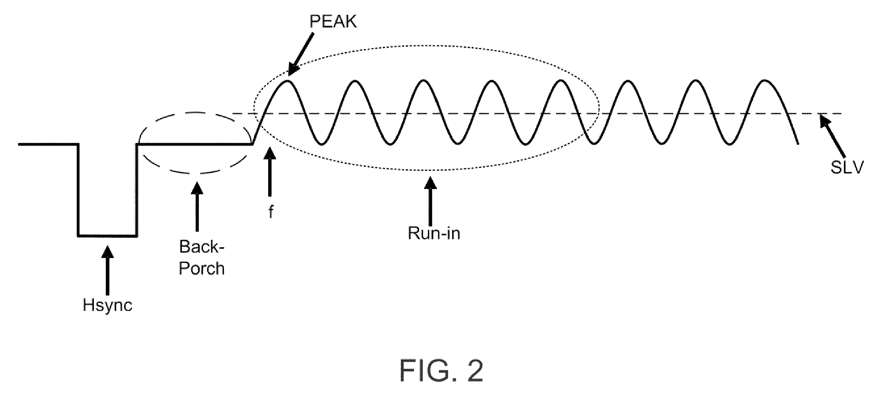

FIG. 1 shows a schematic diagram of a video signal decoding apparatus according to an embodiment of the present invention. A video signal decoding apparatus 10, capable of processing a composite video baseband signal CVBS compliant to the PAL or SECAM standard, includes an analog-to-digital converter (ADC) 110, a horizontal/vertical synchronization (Hsync/Vsync) signal detecting circuit 120, a scan line counter 130, a sampling counter 135, a reference level detecting circuit 140, a run-in code detecting circuit 150, a digital phase-locked loop (PLL) 160, a sampling circuit 170, a start code detecting circuit 180, and an additional information decoding circuit 190. The composite video baseband signal CVBS first passes through the ADC 110 to be converted into a digital signal DCVBS. FIG. 2 shows a waveform of a signal of one scan line of the digital signal DCBVS. The signal of the scan line includes a horizontal synchronization signal Hsync that indicates a start point of a scan line. A trailing edge signal Back-Porch follows the horizontal synchronization signal Hsync, with a data part of the signal of the scan line closely following the trailing edge signal Back-Porch. In general, a system determines a reference level SLV according to an average value of the trailing edge signal Back-Porch and a maximum value Peak of the data part. The reference level SLV serves as a basis for determining a signal level in subsequent signal processes. A signal sampled value greater than the reference level SLV is converted to a binary value "1" (representing a high voltage level), and a sampled value smaller than the reference level SLV is converted to a binary value "0" (representing a low voltage level). In one method for determining the reference level SLV, a predetermined quantity of values of the trailing edge signal Back-Porch are obtained and averaged, and the average value of the trailing edge signal Back-Porch is averaged with a maximum value Peak of the data signal to output a value as the reference level SLV.

Again referring to FIG. 1, the horizontal/vertical synchronization signal detecting circuit 120, coupled to the ADC 110, detects the vertical synchronization signal and the horizontal synchronization signal of the digital signal DCVBS. Upon detecting the horizontal synchronization signal, the horizontal/vertical synchronization signal detecting circuit 120 sends a horizontal synchronization indication signal H to the scan line counter 130 and the sampling counter 135. Each time when receiving the horizontal synchronization indication signal H, the scan line counter 130 adds the counter value by 1. Thus, the value of the scan line counter 130 may be utilized to indicate that the digital signal DCVBS corresponds to an N^{th} scan line (where N is a positive integer) of a current video image. For example, when the value of the scan line counter 130 is 10, it means that the digital signal DCVBS corresponds to the 10^{th} scan line of the current video image. Upon detecting the vertical synchronization signal, the horizontal/vertical synchronization signal detecting circuit 120 sends a vertical synchronization indication signal V to the scan line counter 130. Upon receiving the vertical synchronization indication signal V, the scan line counter 130 resets the counter value to indicate that the digital signal DCVBS corresponds to a new video image. The sampling counter 135 counts according to a sampling clock CLK of the system. The ADC 110 samples the composite video baseband signal CVBS according to the sampling clock CLK of the system to obtain the digital signal DCVBS. Taking one scan line for example, as shown in FIG. 2, according to the accumulated sampling value with reference to the frequency of the sampling clock CLK, for one scan line, the position of data current being processed can be learned. The sampling counter 135 is reset according to the horizontal synchronization indication signal H, and therefore the value of the sampling counter 135 may be utilized to indicate a data time point relative to the horizontal synchronization signal for any scan line. Since the target scan line required by the system, and on that target scan line, the time point of data currently being processed relative to the horizontal synchronization signal, can be obtained through the collaboration of the horizontal/vertical synchronization signal detecting circuit 120, the scan line counter 130 and the sampling counter 135, the three components may be collectively regarded as a scan line detecting circuit. It should be noted that, in addition to the above exemplary scan line detecting circuit according to the embodiment, any circuit capable of achieving the above function may be implemented as a scan line detecting circuit of the present invention.

According to the PAL or SECAM standard, the 23^{rd} scan line of a video image carries aspect ratio information. Further, to assist in obtaining the aspect ratio information, the 23^{rd} scan line also carries identification information and a run-in code Run-in located before the aspect ratio information. The video signal decoding apparatus 10 first finds the signal of the 23^{rd} scan line by utilizing the scan line counter 130. The run-in code detecting circuit 150, coupled to the ADC 110, the scan line counter 130 and the sampling counter 135, learns that the digital signal DCVBS is currently transmitting the signal of the 23^{rd} scan line based on the value of the scan line counter 130, and learns the start time of the 23^{rd} scan line based on the value of the sampling counter 135, i.e., the time point of the horizontal synchronization signal Hsync in FIG. 2. According to the PAL and SECAM television standards, the signal of the scan line in FIG. 2 further carries a run-in code, which is usually included in the first five waves of the data part and is indicated as Run-in in FIG. 2. The identification information and the aspect ratio information of the image closely follow the run-in code Run-in. The last four waves of the run-in code Run-in may be utilized to detect the phase of the digital signal DCVBS to generate a clock having a same phase as the digital signal DCVBS. The digital PLL 160 in FIG. 1 performs such function. However, as the digital PLL 160 has no way of learning the start time of the run-in code Run-in, multiple working intervals are designed in the present invention to allow main elements to start and complete operations within corresponding intervals.

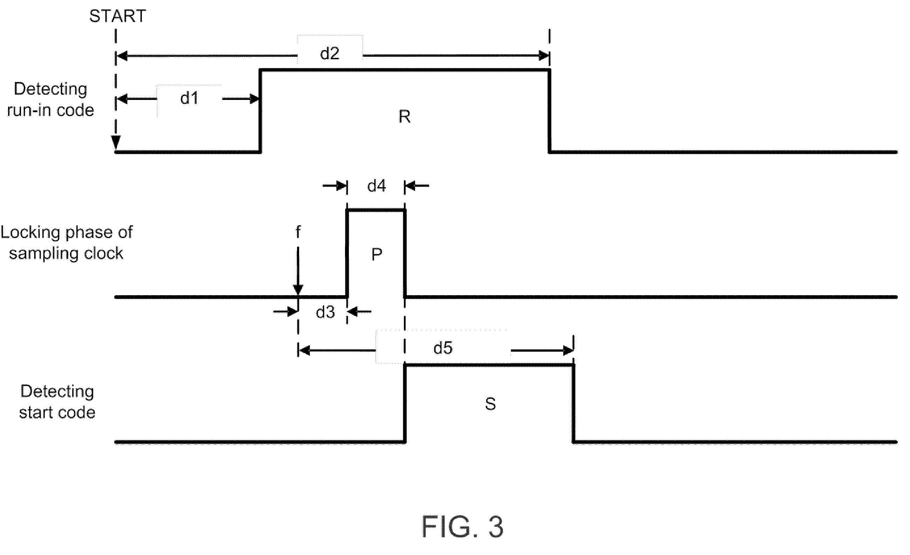

FIG. 3 shows a timing diagram of working intervals of the image signal decoding apparatus 10. In FIG. 3, working intervals of three main processes performed by the video signal decoding apparatus 10 are sequentially a first working interval R for detecting the run-in code, a second working interval P for phase locking, and a third working interval S for detecting the start code. The run-in code detection performed by the run-in code detecting circuit 150 is performed within the first working interval R. The first working interval R is designed with the start time (the time point of Hsync in FIG. 2, and the time point indicated as START in FIG. 3) of the 23^{rd} scan line as a reference point, starting from a time point that is spaced from the reference point by a time period d1 and ending after a time period d2 from the start point. The run-in code detecting circuit 150 may time the time periods d1 and d2 according to the counter value of the sampling counter 135, and calculate the difference between the two time periods d1 and d2 to be the length of the first working interval R. The time periods d1 and d2 are both values predetermined according to the PAL or SECAM standard. For example, the time period d1 is set to be approximately equal to or smaller than the time period of the trailing edge signal Back-Porch. When determining the length of the time period d2, in addition to considering the position at which the run-in code Run-in appears based on the PAL or SECAM standard, a possible error resulted in the time point at which the run-in code Run-in appears due to the transmission process of the composite video baseband signal CVBS also needs to be taken into account, so as to ensure that the first working interval R covers a possible time period in which the run-in code Run-in appears. In the first working interval R, the run-in code detecting circuit 150 detects whether the value of the digital signal DCVBS exceeds a predetermined value to detect whether the run-in code Run-in of the 23^{rd} scan line has begun. Therefore, the predetermined value may be set to be greater than the trailing edge signal Back-Porch. When the value of the digital signal DCVBS exceeds the predetermined value, e.g., a time point f in FIG. 3 (corresponding to a time point f in FIG. 3), the run-in code detecting circuit 150 generates a control signal c3 at a time point that is spaced by a time period d3 from the time point f, a control signal c4 at a time point that is spaced by a time period d4 from the control signal c3, and a control signal c5 that is spaced by a time period d5 from the time point f. The time periods d3, d4 and d5 are similarly predetermined values determined according to the PAL or SECAM standard. For example, the time period d3 may be set to be approximately equal to the time period of the first wave of the run-in code Run-in, and the time period d4 may be set to be approximately equal to a total time period of the last four waves of the run-in-code Run-in. The run-in code detecting circuit 150 may time the time periods d3, d4 and d5 according to the counter values of the sampling counter 135. One method for generating the control signals c3, c4 and c5 may be performed through changing register values of registers in the system by the run-in code detecting circuit 150, and the digital PLL 160 and the start code detecting circuit 180 then operate according to the register values. In an alternative embodiment, an enable signal may be directly sent by the run-in code detecting circuit 150 to the digital PLL 160 and the start code detecting circuit 180.

In an alternative embodiment, the method according to which the run-in code detecting circuit 150 designs the time periods d1 to d5, instead of being determined according to the values of the sampling counter 150, may also be determined by a counter (not shown) built-in the run-in code detecting circuit 150. For example, to time the time periods d3 and d4, upon detecting the start of the run-in code Run-in, the run-in code detecting circuit 150 controls the built-in counter to start counting, and the time periods d3 and d4 are then calculated according to the value of the built-in counter.

Again referring to FIG. 1, the video signal decoding apparatus 10 further includes the reference level detecting circuit 140. The reference level detecting circuit 140, coupled to the ADC 110, the run-in code detecting circuit 150 and the sampling circuit 170, generates the reference level SLV. Details for generating and purposes of the reference level SLV are as previously described, and shall be omitted herein. During the calculation for the reference level SLV, the reference level detecting circuit 140 learns the interval of the trailing edge signal Back-Porch and the possible interval of the peak value PEAK of the signal of the scan line according to the notification from the run-in code detecting circuit 140. The reference level SLV is outputted to the sampling circuit 170 to serve as a reference basis for determining sampled data.

Please refer to FIG. 3. The second working interval P may be determined according to the control signals c3 and c4. The digital PLL 160, coupled to the run-in code detecting circuit 150 and the sampling circuit 170, operates according to the control signal c3. The sampling circuit 170, coupled to the ADC 110, the reference level detecting circuit 140 and the digital PLL 160, samples the digital signal DCVBS according to the sampling clock generated by the digital PLL 160. The sampling circuit 170 further compares the sampled result with the reference level SLV generated by the reference level detecting circuit 140, so as to convert the sampled result to sampled data in a binary value of "0" or "1". In the second working interval P, the digital PLL 160 adjusts the phase of the sampling clock according the sampled data of the 2^{nd} to the 5^{th} waves of the run-in code Run-in, such that the phase of the sampling clock may be consistent with the phase of the run-in code Run-in. One main function of the run-in code Run-in is to correct the phase of the sampling clock such that the phase of the sampling clock satisfies the phase of the digital signal DCVBS. The third working interval S adjacently follows the second working interval P. During the third working interval S, the sampling circuit 170 obtains the sampled data according to the adjusted sampling clock, and further transmits the sampled data to the start code detecting circuit 180 and the additional information decoding circuit 190.

The start code detecting circuit 180, coupled to the run-in code detecting circuit 150 and the sampling circuit 170, starts to detect the identification information upon receiving the control signal c4. The identification information refers to the start code of the signal of the 23^{rd} scan line. As shown in FIG. 3, the detection for the start code is performed in the third working interval S. A start point of the third working interval S is a time point that is delayed by the time periods d3+d4 from the time point f, i.e., an end point of the second working interval P, and an end point of the third working interval S is a time point at which the control signal c5 is generated, i.e., the time point that is delayed by a time period d5 from the time point f. The time period d5 is similarly a value predetermined according to the PAL or SECAM standard. The run-in code detecting circuit 150 may time the time period d5 according to the value of the sampling counter 135. The start code detecting circuit 180 compares the sampled data of the sampling circuit 170 with predetermined reference data to determine whether the start code of the signal of the scan line has been found. According to the PAL or SECAM standard, the reference data is a set of 24-bit data. In practice, the start code detecting circuit 180 obtains 24 successive sets of sampled data as a data group to be compared, and compares the data group with the reference data. When the comparison result is completely correct, it means the start code has been found. When the comparison result is incorrect, the start code detecting circuit 180 discards the first set of data in the data group, obtains a new set of data, adds the new set of data to the remaining 23 sets of data to form a new data group, and compares the new data group with the reference data. If the start code is not found when the third working interval S ends, the process of identifying the aspect ratio information is determined as failed.

Upon successfully detecting the start code, the start code detecting circuit 180 notifies the additional information decoding circuit 190 to start detecting and decoding the aspect ratio information. The additional information decoding circuit 190, coupled to the sampling circuit 170 and the start code detecting circuit 180, obtains aspect ratio information WSS by decoding the sampled data. The aspect ratio information WSS is a set of 14-bit data.

The video signal decoding apparatus 10 determines multiple working intervals according to the PAL or SECAM standard, and processes such as detecting the run-in code, locking the phase of the sampling clock and detecting the start code may all be completed in respective working intervals. Particularly, the working interval for locking the sampling clock and the working interval for detecting the start code are provided according to the start point of the detected run-in code. Thus, more accurate working intervals can be determined and an error tolerance of the video signal decoding apparatus in decoding additional information can be increased.

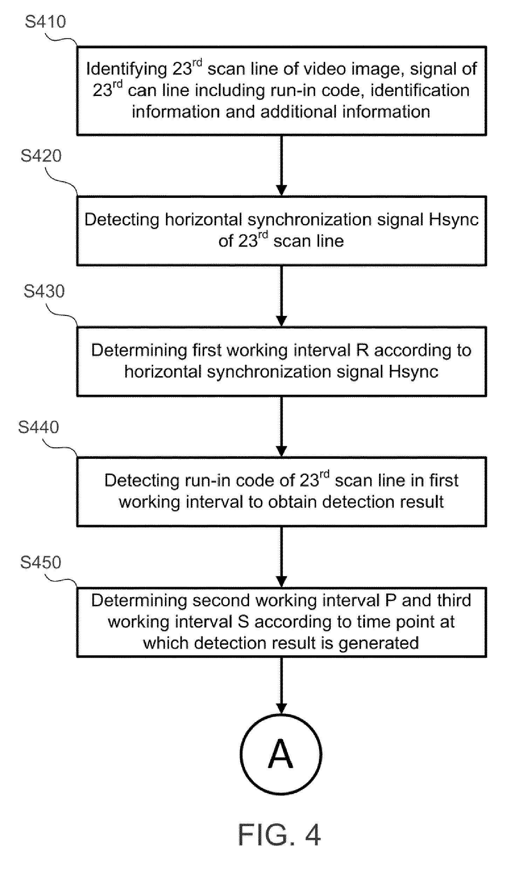

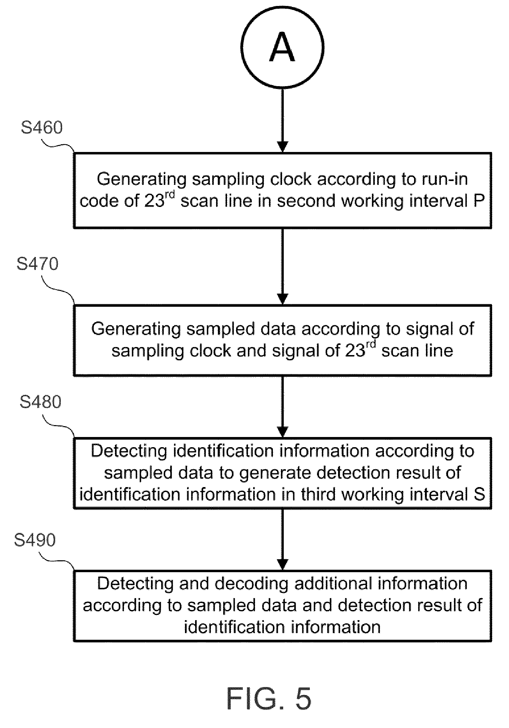

FIGS. 4 and 5 show a flowchart of a video signal decoding method according to an embodiment of the present invention. In addition to the foregoing video signal decoding apparatus 10, a video signal decoding method is further provided by the present invention. The method is applicable to a television signal compliant to the PAL or SECAM standard and is capable obtaining aspect ratio information of a video signal. The method may be performed by the foregoing video signal decoding apparatus 10 or an equivalent apparatus. Referring to FIG. 4, the method includes the following steps.

In step S410, the 23^{rd} scan line of a video image is identified. A signal of the 23^{rd} scan line includes a run-in code, identification information and additional information. According to the PAL or SECAM standard, the 23^{rd} line of a video image represented by a television signal includes additional information associated with the video image, e.g., aspect ratio information of the video image.

In step S420, a synchronization signal Hsync of the 23^{rd} scan line is detected. As shown in FIG. 2, the horizontal synchronization signal Hsync represents the start of one scan line.

In step S430, a first working interval R is determined according to the horizontal synchronization signal Hsync. As shown in FIG. 3, the horizontal synchronization signal Hsync represents the start point START of a scan line, the start point of the first working interval R and the start point START of the scan line are spaced by a time period d1, and an end point of the first working interval R and the start point START of the scan line are spaced by a time period d2. The time periods d1 and d2 are both predetermined according to the PAL or SECAM standard, and are constant values.

In step S440, in the first working interval R, a run-in code of the 23^{rd} scan line is detected to obtain a detection result. As shown in FIG. 2, in addition to the horizontal synchronization signal Hsync, the signal of the 23^{rd} scan line further includes a trailing edge signal Back-Porch, a run-in code Run-in, and a closely following start code (not shown) and aspect ratio information (not shown). The first working interval R is for detecting the start time of the run-in code Run-in. In practice, the signal of the scan line is compared with a predetermined level. When the detection result indicates that the signal of the scan line is greater than the predetermined level, it means that the run-in code has begun, e.g., the time point f shown in FIG. 2. The predetermined level is set to be greater than the trailing edge signal Back-Porch.

In step S450, a second working interval P and a third working interval S are determined according to the time point at which the detection result is generated. As shown in FIG. 3, the start point of the second working interval P and the time point f are spaced by the time period d3, and the second working interval P has a length equal to the time period d4. The time periods d3 and d4 are similarly predetermined according to the PAL or SECAM standard. The start point of the third working interval S is the end point of the second working interval P. That is to say, the start point of the third working interval S and the time point f are spaced by the time periods d3+d4, and the end point of the third working interval S and the time point f are spaced by the time period d5. The time period d5 is also a value predetermined according to the PAL or SECAM standard.

Details of the steps in FIG. 5 are described below. In step S460, in the second working interval P, a sampling clock is generated according to the run-in code of the 23^{rd} scan line. One purpose of the run-in code is to provide a reference clock, according to which a video signal decoding apparatus of a television generates a sampling clock to be later utilized to sample a signal of a scan line. As shown in FIG. 2, the run-in code Run-in includes five waves. In this step, the phase of the sampling clock is adjusted according to the last four waves of the run-in code.

In step S470, sampling data is generated according to the sampling clock and the signal of the 23^{rd} scan line. The sampling clock for sampling may be higher than the clock of the signal of the scan line, and a sampled result obtained is processed into sampled data. Before this step, the system first generates a reference level, and the above process includes comparing the sampled result with the reference level to generate the sampled data. When the sampled result is greater than the reference level, the sampled data is "1"; when the sampled result is smaller than the reference level, the sampled data is "0". That is, the sampled data is in a unit of a binary value. The reference level is the reference level SLV shown in FIG. 2, and associated details are as previously described and shall be omitted herein.

In step S480, in the third working interval S, identification information is detected to generate a detection result of the identification information. The identification information refers to a start code located subsequent to the run-in code Run-in. Details for detecting the start-code are as previously described, and shall be omitted herein.

In step S490, additional information is detected and decoded according to the sampled data and the detection result of the identification information. The additional information may be aspect ratio information of the image. The detection result of the identification information indicates that the signal of the scan line is to next transmit the aspect ratio information of the image, and so the system starts performing processes of detecting and decoding the aspect ratio information of the image. After decoding the sampled data, aspect ratio information in a set of 14-bit data is obtained.

Operations details and variations may be referred from the description associated with the apparatus in FIG. 1 by one skilled person in the art. Without affecting the full disclosure and possible implementation of the method, such repetitive description shall be omitted. Further, shapes, sizes and ratios of the objects are exemplary for one skilled person in the art to understand the application, not to limit the application. Each of the disclosed embodiments has one or more technical features. However, it does not mean that implementation of the application needs every technical feature of any embodiment of the application or combination of the embodiments of the application is prohibited. In other words, in possible implementation, one skilled person in the art would selectively implement part or all technical features of any embodiment of the application or selectively combine part or all technical features of the embodiments of the application based on the disclosure of the application and his/her own need. Implementation of the application is flexible. Although the disclosed embodiments are exemplified by the PAL or SECAM standard, one person skilled in the art may appropriately applied the application to other types of television signal standards based on the disclosure of the application.

## Claims

1. A video signal decoding method, for decoding additional information in a video signal, the video signal comprising a plurality of scan lines corresponding to a video image, the method comprising:
detecting (S410) a target scan line in the video signal, a signal of the target scan line comprising a run-in code, identification information and the additional information;
determining (S430) a first working interval (R) according to a synchronization signal corresponding to the target scan line;
detecting (S440) the run-in code in the first working interval (R);
determining (S450) a second working interval (P) and a third working interval (S) according to a time point at which the run-in code is detected;
in the second working interval (P), adjusting (S460) a sampling clock according to the run-in code;
generating (S470) sampled data according to the sampling clock and the signal of the target scan line;
in the third working interval (S), detecting (S480) the identification information according to the sampled data to generate a detection result of the identification information; and
decoding (S490) the additional information according to the sampled data and the detection result of the identification information.

2. The method according to claim 1, wherein the step of detecting (S410) the target scan line comprises:
generating a vertical synchronization indication signal and a horizontal synchronization indication signal according to a vertical synchronization signal and a horizontal synchronization signal of the video signal, respectively; and
accumulating a counter value according to the horizontal synchronization indication signal, and resetting the counter value according to the vertical synchronization indication signal;
wherein, the counter value is associated with the target scan line.

3. The method according to claim 1 or 2, further comprising:
generating a reference level according to the video signal;
wherein, the step of generating (S470) the sampled data according to the sampling clock and the signal of the target scan line comprises:
generating a sampled result by sampling the signal of the target scan line according to the sampling clock; and
converting the sampled result to the sampled data according to the reference level.

4. The method according to claim 1, 2 or 3, wherein a time difference (d1) between a start point of the first working interval (R) and a reference point of the synchronization signal corresponding to the target scan line is a predetermined value.

5. The method according to any of claims 1 to 4, wherein a time difference (d3) between a start point of the second working interval (P) and the time point (f) at which the run-in code is detected is a predetermined value.

6. The method according to any of claims 1 to 5, wherein a start point of the third working interval (S) is an end time of the second working interval (P).

7. The method according to any of claims 1 to 6, wherein a time period of the third working interval (S) is a predetermined value.

8. The method according to any of claims 1 to 7, wherein the additional information comprises aspect ratio information of the video image.

9. A video signal decoding apparatus, configured for decoding additional information in a video signal, the video signal comprising a plurality of scan lines corresponding to a video image, the apparatus comprising:
a scan line detecting circuit (120), configured to detect a target scan line in the video signal and to correspondingly generate an indication signal, a signal of the target scan line comprising a run-in code, identification information and the additional information;
a run-in code detecting circuit (150), configured to detect the run-in code in a first working interval (R);
an adjusting circuit (160), coupled to the run-in code detecting circuit (150), configured to adjust a sampling clock according to the run-in code in a second working interval (P);
a sampling circuit (170), configured to generate sampled data according to the sampling clock and the signal of the target scan line;
an identification information detecting circuit (180), configured to detect the identification information according to the sampled data to generate a detection result of the identification information in a third working interval (S);
an additional information decoding circuit (190), configured to decode the additional information according to the sampled data and the detection result of the identification information;
wherein, the second working interval (P) and the third working interval (S) are determined according to a time point (f) at which the run-in code is detected.

10. The apparatus according to claim 9, wherein the scan line detecting circuit (120) comprises:
a synchronization signal detecting circuit, configured to generate a vertical synchronization indication signal and a horizontal synchronization indication signal according to a vertical synchronization signal and a horizontal synchronization signal of the video signal, respectively;
a first counter (130), configured to accumulate a first counter value according to the horizontal synchronization indication signal, and to reset the first counter value according to the vertical synchronization indication signal; and
a second counter (135), configured to accumulate a second counter value according to a clock signal, and to reset the second counter value according to the horizontal synchronization indication signal;
wherein, the first counter value is associated with the target scan line, and the second counter value is associated with the indication signal.

11. The apparatus according to claim 9 or 10, further comprising:
a reference level detecting circuit (140), coupled to the sampling circuit (170), configured to generate a reference level according to the video signal;
wherein, the sampling circuit (170) generates a sampled result by sampling the signal of the target scan line according to the sampling clock, and converts the sampled result to the sampled data according to the reference level.

12. The apparatus according to claim 9, 10 or 11, wherein a time difference (d3) between a start point of the second working interval (P) and the time point (f) at which the run-in code is detected is a predetermined value.

13. The apparatus according to any of claims 9 to 12, wherein the additional information comprises aspect ratio information of the video image.

14. The method according to any of claims 1 to 8 or the apparatus according to any of claims 9 to 13, wherein a time period of the first working interval (R) is a predetermined value and/or wherein a start point of the third working interval (S) is an end time of the second working interval (P).

15. The method according to any of claims 1 to 8 or 14 or the apparatus according to any of claims 9 to 14, wherein the video signal is compliant to the PAL or SECAM standard.

## Patentansprüche

1. Ein Videosignal-Decodierverfahren zum Decodieren von zusätzlichen Informationen in einem Videosignal, wobei das Videosignal eine Vielzahl von Abtastzeilen aufweist, die einem Videobild entsprechen, wobei das Verfahren aufweist:
Erfassen (S410) einer Zielabtastzeile im Videosignal, wobei ein Signal der Zielabtastzeile einen Einlaufcode, Identifikationsinformationen und die zusätzlichen Informationen aufweist;
Bestimmen (S430) eines ersten Arbeitsintervalls (R) gemäß einem Synchronisationssignal, das der Zielabtastzeile entspricht;
Erfassen (S440) des Einlaufcodes im ersten Arbeitsintervall (R);
Bestimmen (S450) eines zweiten Arbeitsintervalls (P) und eines dritten Arbeitsintervalls (S) gemäß einem Zeitpunkt, zu dem der Einlaufcode detektiert wird;
im zweiten Arbeitsintervall (P) Einstellen (S460) eines Abtasttakts gemäß dem Einlaufcode;
Erzeugen (S470) von abgetasteten Daten gemäß dem Abtasttakt und dem Signal der Zielabtastzeile;
im dritten Arbeitsintervall (S) Erfassen (S480) der Identifikationsinformationen gemäß den abgetasteten Daten, um ein Detektionsergebnis der Identifikationsinformationen zu erzeugen; und
Decodieren (S490) der zusätzlichen Informationen gemäß den abgetasteten Daten und dem Detektionsergebnis der Identifikationsinformationen.

2. Das Verfahren nach Anspruch 1, wobei der Schritt des Erfassens (S410) der Zielabtastzeile aufweist:
Erzeugen eines vertikalen Synchronisationshinweissignals und eines horizontalen Synchronisationshinweissignals gemäß einem vertikalen Synchronisationssignal bzw. einem horizontalen Synchronisationssignal des Videosignals; und
Akkumulieren eines Zählerwerts gemäß dem horizontalen Synchronisationshinweissignal und Zurücksetzen des Zählerwerts gemäß dem vertikalen Synchronisationshinweissignal;
wobei der Zählerwert der Zielabtastzeile zugeordnet ist.

3. Das Verfahren nach Anspruch 1 oder 2, das ferner aufweist:
Erzeugen eines Bezugspegels gemäß dem Videosignal;
wobei der Schritt des Erzeugens (S470) der abgetasteten Daten gemäß dem Abtasttakt und dem Signal der Zielabtastzeile aufweist:
Erzeugen eines abgetasteten Ergebnisses durch Abtasten des Signals der Zielabtastzeile gemäß dem Abtasttakt; und
Umwandeln des abgetasteten Ergebnisses in die abgetasteten Daten gemäß dem Bezugspegel.

4. Das Verfahren nach Anspruch 1, 2 oder 3, wobei eine Zeitdifferenz (d1) zwischen einem Startpunkt des ersten Arbeitsintervalls (R) und einem Bezugspunkt des Synchronisationssignals, das der Zielabtastzeile entspricht, ein vorbestimmter Wert ist.

5. Das Verfahren nach einem der Ansprüche 1 bis 4, wobei eine Zeitdifferenz (d3) zwischen einem Startpunkt des zweiten Arbeitsintervalls (P) und dem Zeitpunkt (f), zu dem der Einlaufcode detektiert wird, ein vorbestimmter Wert ist.

6. Das Verfahren nach einem der Ansprüche 1 bis 5, wobei ein Startpunkt des dritten Arbeitsintervalls (S) eine Endzeit des zweiten Arbeitsintervalls (P) ist.

7. Das Verfahren nach einem der Ansprüche 1 bis 6, wobei eine Zeitdauer des dritten Arbeitsintervalls (S) ein vorbestimmter Wert ist.

8. Das Verfahren nach einem der Ansprüche 1 bis 7, wobei die zusätzlichen Informationen Seitenverhältnisinformationen des Videobildes aufweisen.

9. Eine Videosignal-Decodiervorrichtung, die zum Decodieren von zusätzlichen Informationen in einem Videosignal ausgelegt ist, wobei das Videosignal eine Vielzahl von Abtastzeilen aufweist, die einem Videobild entsprechen, wobei die Vorrichtung aufweist:
eine Abtastzeilen-Detektionsschaltung (120), die dazu ausgelegt ist, eine Zielabtastzeile im Videosignal zu erfassen und entsprechend ein Hinweissignal zu erzeugen, wobei ein Signal der Zielabtastzeile einen Einlaufcode, Identifikationsinformationen und die zusätzlichen Informationen aufweist;
eine Einlaufcode-Detektionsschaltung (150), die dazu ausgelegt ist, den Einlaufcode in einem ersten Arbeitsintervall (R) zu erfassen;
eine Einstellschaltung (160), die mit der Einlaufcode-Detektionsschaltung (150) gekoppelt ist, die dazu ausgelegt ist, einen Abtasttakt gemäß dem Einlaufcode in einem zweiten Arbeitsintervall (P) einzustellen;
eine Abtastschaltung (170), die dazu ausgelegt ist, abgetastete Daten gemäß dem Abtasttakt und dem Signal der Zielabtastzeile zu erzeugen;
eine Identifikationsinformations-Detektionsschaltung (180), die dazu ausgelegt ist, die Identifikationsinformationen gemäß den abgetasteten Daten zu erfassen, um ein Detektionsergebnis der Identifikationsinformationen in einem dritten Arbeitsintervall (S) zu erzeugen;
eine Decodierschaltung (190) für zusätzliche Informationen, die dazu ausgelegt ist, die zusätzlichen Informationen gemäß den abgetasteten Daten und dem Detektionsergebnis der Identifikationsinformationen zu decodieren;
wobei das zweite Arbeitsintervall (P) und das dritte Arbeitsintervall (S) gemäß einem Zeitpunkt (f) bestimmt werden, zu dem der Einlaufcode detektiert wird.

10. Die Vorrichtung nach Anspruch 9, wobei die Abtastzeilen-Detektionsschaltung (120) aufweist:
eine Synchronisationssignal-Detektionsschaltung, die dazu ausgelegt ist, ein vertikales Synchronisationshinweissignal und ein horizontales Synchronisationshinweissignal gemäß einem vertikalen Synchronisationssignal bzw. einem horizontalen Synchronisationssignal des Videosignals zu erzeugen;
einen ersten Zähler (130), der dazu ausgelegt ist, einen ersten Zählerwert gemäß dem horizontalen Synchronisationshinweissignal zu akkumulieren und den ersten Zählerwert gemäß dem vertikalen Synchronisationshinweissignal zurückzusetzen; und
einen zweiten Zähler (135), der dazu ausgelegt ist, einen zweiten Zählerwert gemäß einem Taktsignal zu akkumulieren und den zweiten Zählerwert gemäß dem horizontalen Synchronisationshinweissignal zurückzusetzen;
wobei der erste Zählerwert der Zielabtastzeile zugeordnet ist und der zweite Zählerwert dem Hinweissignal zugeordnet ist.

11. Die Vorrichtung nach Anspruch 9 oder 10, die ferner aufweist:
eine Bezugspegel-Detektionsschaltung (140), die mit der Abtastschaltung (170) gekoppelt ist, die dazu ausgelegt ist, einen Bezugspegel gemäß dem Videosignal zu erzeugen;
wobei die Abtastschaltung (170) ein abgetastetes Ergebnis durch Abtasten des Signals der Zielabtastzeile gemäß dem Abtasttakt erzeugt und das abgetastete Ergebnis in die abgetasteten Daten gemäß dem Bezugspegel umwandelt.

12. Die Vorrichtung nach Anspruch 9, 10 oder 11, wobei eine Zeitdifferenz (d3) zwischen einem Startpunkt des zweiten Arbeitsintervalls (P) und dem Zeitpunkt (f), zu dem der Einlaufcode detektiert wird, ein vorbestimmter Wert ist.

13. Die Vorrichtung nach einem der Ansprüche 9 bis 12, wobei die zusätzlichen Informationen Seitenverhältnisinformationen des Videobildes aufweisen.

14. Das Verfahren nach einem der Ansprüche 1 bis 8 oder die Vorrichtung nach einem der Ansprüche 9 bis 13, wobei eine Zeitdauer des ersten Arbeitsintervalls (R) ein vorbestimmter Wert ist und/oder wobei ein Startpunkt des dritten Arbeitsintervalls (S) eine Endzeit des zweiten Arbeitsintervalls (P) ist.

15. Das Verfahren nach einem der Ansprüche 1 bis 8 oder 14 oder die Vorrichtung nach einem der Ansprüche 9 bis 14, wobei das Videosignal mit dem PAL- oder SECAM-Standard kompatibel ist.

## Revendications

1. Procédé de décodage de signal vidéo permettant de décoder des informations supplémentaires dans un signal vidéo, le signal vidéo comprenant une pluralité de lignes de balayage correspondant à une image vidéo, le procédé comprenant :
la détection (S410) d'une ligne de balayage cible dans le signal vidéo, le signal de la ligne de balayage cible comprenant un code d'exécution, des informations d'identification et les informations supplémentaires,
la détermination (S430) d'un premier intervalle de travail (R) en fonction d'un signal de synchronisation correspondant à la ligne de balayage cible,
la détection (S440) du code d'exécution dans le premier intervalle de travail (R),
la détermination (S450) d'un deuxième intervalle de travail (P) et d'un troisième intervalle de travail (S) en fonction d'un point dans le temps auquel le code d'exécution est détecté,
l'ajustement (S460), dans le deuxième intervalle de travail (P), d'une horloge d'échantillonnage en fonction du code d'exécution,
la génération (S470) de données échantillonnées en fonction de l'horloge d'échantillonnage et du signal de la ligne de balayage cible,
la détection (S480), dans le troisième intervalle de travail (S) des informations d'identification en fonction des données échantillonnées dans le but de générer un résultat de détection des informations d'identification, et
le décodage (S490) des informations supplémentaires en fonction des données échantillonnées et du résultat de détection d'informations d'identification.

2. Procédé selon la revendication 1, dans lequel l'étape de détection (S410) de la ligne de balayage cible comprend :
la génération respective d'un signal d'indication de synchronisation verticale et d'un signal d'indication de synchronisation horizontale en fonction d'un signal de synchronisation verticale et d'un signal de synchronisation horizontale du signal vidéo, et
l'accumulation d'une valeur de comptage en fonction du signal d'indication de synchronisation horizontale, et la remise à zéro de la valeur de comptage en fonction du signal d'indication de synchronisation verticale,
dans lequel la valeur de comptage est associée à la ligne de balayage cible.

3. Procédé selon la revendication 1 ou la revendication 2, comprenant en outre :
la génération d'un niveau de référence en fonction du signal vidéo,
l'étape de génération (S470) des données échantillonnées en fonction de l'horloge d'échantillonnage et du signal de la ligne de balayage cible comprenant :
la génération d'un résultat échantillonné en échantillonnant le signal de la ligne de balayage cible en fonction de l'horloge d'échantillonnage, et
la conversion du résultat échantillonné en données échantillonnées en fonction du niveau de référence.

4. Procédé selon la revendication 1, la revendication 2 ou la revendication 3, dans lequel la différence de temps (d1) entre le point de début du premier intervalle de travail (R) et un point de référence du signal de synchronisation correspondant à la ligne de balayage cible représente une valeur prédéterminée.

5. Procédé selon l'une quelconque des revendications 1 à 4, dans lequel la différence de temps (d3) entre le point de début du deuxième intervalle de travail (P) et le point dans le temps (f) auquel est détecté le code d'exécution représente une valeur prédéterminée.

6. Procédé selon l'une quelconque des revendications 1 à 5, dans lequel le point de début du troisième intervalle de travail (S) représente l'instant de fin du deuxième intervalle de travail (P).

7. Procédé selon l'une quelconque des revendications 1 à 6, dans lequel un intervalle de temps du troisième intervalle de travail (S) représente une valeur prédéterminée.

8. Procédé selon l'une quelconque des revendications 1 à 7, dans lequel les informations supplémentaires comprennent des informations sur le rapport de forme de l'image vidéo.

9. Appareil de décodage de signal vidéo, configuré pour décoder des informations supplémentaires dans un signal vidéo, le signal vidéo comprenant une pluralité de lignes de balayage correspondant à une image vidéo, l'appareil comprenant :
un circuit de détection de ligne de balayage (120) configuré pour détecter une ligne de balayage cible dans le signal vidéo et pour générer en correspondance un signal d'indication, le signal de la ligne de balayage cible comprenant un code d'exécution, des informations d'identification et les informations supplémentaires,
un circuit de détection de code d'exécution (150) configuré pour détecter le code d'exécution dans un premier intervalle de travail (R),
un circuit d'ajustement (160) couplé au circuit de détection de code d'exécution (150) configuré pour ajuster une horloge d'échantillonnage en fonction du code d'exécution dans un deuxième intervalle de travail (P),
un circuit d'échantillonnage (170) configuré pour générer des données échantillonnées en fonction de l'horloge d'échantillonnage et du signal de la ligne de balayage cible,
un circuit de détection d'informations d'identification (180) configuré pour détecter les informations d'identification en fonction des données échantillonnées dans le but de générer un résultat de détection des informations d'identification dans un troisième intervalle de travail (S),
un circuit de décodage d'informations supplémentaires (190) configuré pour décoder les informations supplémentaires en fonction des données échantillonnées et du résultat de détection des informations d'identification,
dans lequel le deuxième intervalle de travail (P) et le troisième intervalle de travail (S) sont déterminés en fonction d'un point dans le temps (f) auquel est détecté le code d'exécution.

10. Appareil selon la revendication 9, dans lequel le circuit de détection de ligne de balayage (120) comprend :
un circuit de détection de signal de synchronisation configuré pour générer respectivement un signal d'indication de synchronisation verticale et un signal d'indication de synchronisation horizontale en fonction d'un signal de synchronisation verticale et d'un signal de synchronisation horizontale du signal vidéo,
un premier compteur (130) configuré pour accumuler une première valeur de comptage en fonction du signal d'indication de synchronisation horizontale, et pour remettre à zéro la première valeur de comptage en fonction du signal d'indication de synchronisation verticale, et
un second compteur (135) configuré pour accumuler une seconde valeur de comptage en fonction d'un signal d'horloge, et pour remettre à zéro la seconde valeur de comptage en fonction du signal d'indication de synchronisation horizontale,
dans lequel la première valeur de comptage est associée à la ligne de balayage cible, et la seconde valeur de comptage est associée au signal d'indication.

11. Appareil selon la revendication 9 ou la revendication 10, comprenant en outre :
un circuit de détection de niveau de référence (140) couplé au circuit d'échantillonnage (170) et configuré pour générer un niveau de référence en fonction du signal vidéo,
dans lequel le circuit d'échantillonnage (170) génère un résultat échantillonné en échantillonnant le signal de la ligne de balayage cible en fonction de l'horloge d'échantillonnage, et il convertit le résultat échantillonné en données échantillonnées en fonction du niveau de référence.

12. Appareil selon la revendication 9, la revendication 10 ou la revendication 11, dans lequel la différence de temps (d3) entre le point de début du deuxième intervalle de travail (P) et le point dans le temps (f) auquel est détecté le code d'exécution représente une valeur prédéterminée.

13. Appareil selon l'une quelconque des revendications 9 à 12, dans lequel les informations supplémentaires comprennent des informations sur le rapport de forme de l'image vidéo.

14. Procédé selon l'une quelconque des revendications 1 à 8 ou appareil selon l'une quelconque des revendications 9 à 13, dans lequel un intervalle de temps du premier intervalle de travail (R) représente une valeur prédéterminée et/ou dans lequel le point de début du troisième intervalle de travail (S) représente l'instant de fin du deuxième intervalle de travail (P).

15. Procédé selon l'une quelconque des revendications 1 à 8 ou 14, ou appareil selon l'une quelconque des revendications 9 à 14, dans lequel le signal vidéo est conforme à la norme PAL ou SECAM.
